(19) Europäisches Patentamt

European Patent Office

Office européen des brevets

(11) EP 0 885 665 A2

## (12) EUROPEAN PATENT APPLICATION

(43) Date of publication:
23.12.1998 Bulletin 1998/52

(51) Int. Cl.⁶: $B07C\ 5/342$, $G01J\ 3/50$, $G01N\ 21/25$

(21) Application number: 98111126.3

(22) Date of filing: 17.06.1998

(84) Designated Contracting States:
AT BE CH CY DE DK ES FI FR GB GR IE IT LI LU MC NL PT SE
Designated Extension States:
AL LT LV MK RO SI

(30) Priority: 18.06.1997 IT MI971428

(71) Applicant: SINCO RICERCHE S.p.A.
28048 Verbania Pallanza (Verbania) (IT)

(72) Inventors:
• Pieri, Giovanni
  28100 Novara (IT)
• Giordano, Dario
  15057 Tortona (Alessandria) (IT)

(74) Representative:
Gerbino, Angelo et al
c/o JACOBACCI & PERANI S.p.A.
Corso Regio Parco, 27
10152 Torino (IT)

(54) Method for the colour identification of hollow articles

(57) Method for the colour identification of hollow bodies of plastics material comprising carrying out measurements of reflectance in spectrum bands respectively of short, medium and long wavelengths and associating to each colour sets of three reflectance values characteristic of that colour.

EP 0 885 665 A2

**Description**

The present invention refers to a method for the colour identification of hollow bodies in plastics material, in particular of beverage bottles of polyester resins.

The plastics bottles, after the separate collection and selection of those formed of different polymers, are separated by colour, sending lots of materials, as much as possible homogeneous, to recycling operations.

Only lots of recycled material particularly pure as regards also the colour can be used in the textile industry for yarns and valuable fabrics. It follows that the recycling industry of bottles and hollow bodies is aimed at separation technologies by colour having high selectivity.

For economic reasons the same industry pursues technologies of high efficiency, not involving high scraps quantity as price of the high purity.

Although the recycled bottles have not in themselves a high value for weight unit, loss of material or degrading the same to less esteemed uses involve the defeat of the collection, separation and washing operations and an increase of unit costs of the entire operation.

The colour separation is made playing on the absorption spectrum properties of the coloured polymers. The spectrum properties depend in small extent on the polymer properties and for the greater part are determined by the properties of the dyes that the bottles producer uses to give the desired aspect to his product. In principle, different colours present dissimilar spectra with absorption peaks in different spectrum bands. It would be enough to choose a wavelength at which the various spectra show sensibly different absorption for being able to discriminate the colours with only one measurement.

Photometric instruments based on this principle are generally used for the separation by colour in the industrial scale recycling plants. The so made operation presents however so many severe troubles to prevent the reaching of the objectives both of purity of the obtained fractions and of separation efficiency.

Recent data on industrial scale operations give indeed results of following types:

- the fraction shown as green contains only 75% of green bottles
- the fraction shown as blue contains 3% of green bottles
- the fraction shown as "clear" contains 10% of blue bottles and 5% of other colours.

The reasons of this bad functioning are of following three types:

- the wide variety of dyes introduced constantly by bottles producers,
- the dirt which alters the real spectrum properties in comparison with the ones measured in laboratory,
- the variety of bottles flattening methods used in compressing the bottles.

The recycling industry has followed, up to now, three ways to meet with the situation.

First of all it has been asked to the producers to standardize the used pigments. The producers have not followed the invitation because the colour is essential for the product image and the renunciation of only one gradation could damage the marketing strategies.

In the second place it has been required to use with the dyes some auxiliary substances as tracer to be used by everybody and easily recognizable through photometry. In this case there are considerable technical difficulties, such as the interference of the tracers with the colour and the necessity to use tracers consistent with the alimentary use.

Thirdly, it has been tried to improve the photometrical method itself by selecting case by case the most favorable wavelength to the colour identification and by calibrating the instruments with the best care.

Instruments which use two or more wavelengths at the same time, so as to increase the discriminating capacity, have been proposed.

These efforts have been nevertheless defeated by the continuous introduction on the market of new colours and by the fact that the spectrum properties in transmission, even if they are connected with the colour perceived by the human eye, do not reflect it univocally.

It thus happens that, two bottles which seem to an observer green and of not very different shade, have two spectra completely different for presence, number and height of the peaks, trying sorely the capacity of the instrument planner of getting a method really capable of discriminating them.

In principle a large number of wavelengths could be used.

Apart the equipment price, which should increase considerably, the problem could be transformed into a recognition of bands already difficult in itself and could be jeopardized by the use of new colours which implies to previously identify the new patterns and to modify the recognition software.

After all, the photometric method whatever the number of the used wavelengths may be, is in practice helpless visa-vis the contaminants, dirt influence and the changeable thickness of the object, which influence the spectral properties in an unforseeable and unverifiable mode.

The human eye can determinate with little or no error the colour of an object even under conditions of poor and abnormal illumination and of varying frequency, conditions which usually put in a difficult position the photometric methods. In practice when an observer classifies a bottle as "green", he maintains this classification also in the presence of non-excessive dirt quantities or any compression state it has been reduced and even if the same green colour has been obtained with pigments of different spectral properties.

In the recycling industry there is the necessity to have at disposal a method which, as the human eye, can recognize the colours univocally even under not favourable conditions.

It has now unexpectedly found that it is possible to identify the colour of a plastics hollow body which can be transparent, semiopaque or opaque, as the human eye perceives it, by reflectance measurements respectively in the regions of the short, middle and long wavelengths of the visible spectrum and by associating to each colour sets of three values of reflectance, characteristic of that colour.

The blue colour, for example, is associated to sets of three values, wherein the reflectance in the regions of the short, middle and long wavelengths is respectively of 60, 35 and 20 or of 64, 36 and 27 which identify in every case a blue colour. The highest reflectance is present in the region of the short wavelengths.

Similarly, sets of three values referred to the short, middle and long wavelengths of 25, 60 and 30 or 23, 67 and 29 or 45, 75 and 48 identify in every case a green colour and more precisely in the case of the first set of three values a grass-green, in the second one a deep green and in the third one a light green.

A violet colour is identified by a set of three values with a minimum of reflectance in the region of the middle wavelengths.

A red colour is identified by sets of three values wherein the reflectance in the region of the middle wavelengths presents a minimum.

For example a representative set for red is 80, 15 and 25 respectively for the reflectance in the regions of the long, middle and short wavelengths.

In the case of yellow, the set of the three values presents a minimum in the region of the short wavelengths.

In the case of grey the reflectance is the same in the three spectrum regions.

The reflectance is intended as the ratio between the intensity of the light reflected from the object and the intensity of the light supplied by the source illuminating the object.

The regions of the short, middle and long wavelengths are those comprised respectively over 610 nm, between 500 and 610 nm and up to 500 nm.

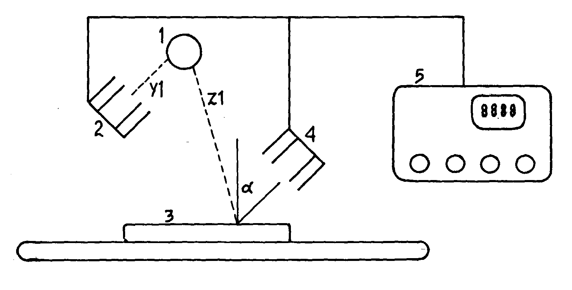

The device used for measuring the reflectance is schematized in fig. 1. A light source 1 is placed up in such a way as to hang over the object of which the colour has to be established and to light it completely.

A light source can be simple or multiple. In this case it can be composed by lamps with both the same emission spectrum and spectrum with different emissions.

The energy emitted by the light source has to be present in every zone of the spectrum of the visible light, i.e. at the short, middle and long wavelengths; this energy has to be preferably distributed in an uniform way among the different regions of the spectrum.

Two examples of how such requirement can be satisfied are: a) a single fluorescent lamp of the sunlight or daylight type with spectrum temperature of 6100 or 5700 K or b) with a set of three lamps emitting monochromatic light with three different wavelengths distributed in the three regions of the spectrum such as 450, 530, 630 nm (alternatively 450, 540, 670 nm or other sets of three that case by case should be favourite).

The emission total intensity does not influence in principle the functioning mechanism of the device and can be set following the sensitivity of the sensors used for the colour detection.

In position 2 a station is placed for the detection of the light emitted from the light source. The station is formed by three sensors with wide angle which give an integrated measurement of the amount of received light.

The position, distance and aiming angle towards the light source are selected in conformity with the good practice to allow the measurement of the light emitted from the source under satisfactory conditions. Everyone of the three sensors is screened with a filter whose passband is placed in the short, middle and long wavelengths of the spectrum. These bands can be narrow and centred on a single wavelength of the visible spectrum or with wide band; the band width has not to exceed of ½ the total extent of the visible spectrum and the average value has to be close to the set of three values already mentioned as example with regard to the lamps. If the light source is made of three monochromatic lamps the filters can be omitted, by using sensors with narrow band, everyone directed respectively on one of the three light sources. This measurement station is not strictly necessary , but it would be better to utilize it for the correction of the effect of possible property decays of the lamps or their partial bad functioning.

The object whose colour has to be established is placed in the position 3. Generally it is a bottle flattened in all its length, represented as a semitransparent double layer of material.

The device can operate also with bottles flattened from top to bottom or with other objects of any shape. The objects shall preferably present a surface sufficiently parallel to the bearing plane. Furthermore their space occupied in height should be small (no more than some percentage of the length of the optical path from the light source to the object). The object can be brought to the measurement with any system of the well known technique, for example manually, or with a conveyor belt of adequate speed in order to present it isolated from other objects and in the most suitable position. The background on which the object is placed, can be in principle of any colour and preferably an opaque colour.

The choice of this colour can be made to improve the efficiency of the separation of some particular colours. A white background, for example, makes easier the separation between transparent and coloured bottles, while a grey background makes easier the separation between transparent and white , semiopaque bottles.

Position 4 represents a set of three sensors with a narrow opening pointed to the object of which the colour has to be established.

The three sensors are screened with filters with the same characteristics of those used for the three sensors of position 2 and already described.

The filters can be omitted in case there are three light sources emitting at different wavelengths. In this case, the sensors will be placed in such a way that everyone of these sensors intercepts the light flux reflected from the object, coming from only one of the three sources and screened with respect to those deriving from the others.

The sensors estimate the luminous intensity reflected from the bottle surface and from the support bottom through the same bottle. In principle the system works with any pointing angle $\alpha$ in fig. 1 in the whole space of 180°. Angles $\alpha$ between -45° and +45° will be preferably used to avoid, when higher angles are used, a specular reflection from the surface. In particular the positive angles have to be preferred to the negative ones to give more sensibility to the device.

In the position 5 it is schematically represented a processing unit of the signals coming from the sensors. The signals processing (that can be carried out with well-known techniques such as manual, graphic, digital processing and so on ) takes place according to the following stages:

- the signal of light sensors is quantified as radiation flux
- the radiation flux determined by the sensor of the light reflected by the object in the short wavelengths, is divided by the flux determined by the sensor of the light, emitted from the light source in the same wavelengths (it is determined by the reflectance in the short wavelengths)
- the procedure is repeated for the sensors couples which operate respectively in the medium and long waves of the visible spectrum.
- each element of the set of three numbers, so obtained, is adjusted to calculate the different distances of the sensors from the light source.

The adjustment is easy for punctiform light sources.

For example, called x1 the first element of the set of three and y1 and z1 the distances from the light source of the sensor which measures the light emitted from the source and of the sensor which measures the light reflected from the object (see fig.1) the value after the adjustment is given by the following expression:

$$x1corr = 100x1 \, (z1/yl)^2$$

In this way it is obtainable a set of three correct percent values, which represents the exit signal of the device.

It has been found that the set of three values as above defined represent all colours visible to the human eye, included white and black. The set of three values represent also the colours deriving from the superposition of blue and red, which in the colours spectroscopical theory are called non-spectral colours because no wavelengths of the visible spectrum correspond to them.

The advantage of being able to represent without exceptions, the colours with only one system, is important from the industrial viewpoint to guarantee stability and reproducibility to the measurement and also the capability to classify, according to the grading by human observers, any type of bottle put on the market.

In the following table set of three values corresponding to the more common colours are reported by way of example.

| wavelength | long $x_{1corr}$ | medium $x_{2corr}$ | short $x_{3corr}$ | colour |
|---|---|---|---|---|
| case N° | | | | |
| 1 | 2 | 2 | 2 | black |
| 2 | 80 | 80 | 80 | white |
| 3 | 40 | 40 | 40 | pale grey |
| 4 | 10 | 10 | 10 | dark grey |
| 5 | 80 | 15 | 25 | red |
| 6 | 85 | 75 | 25 | yellow |
| 7 | 20 | 35 | 60 | blue |
| 8 | 25 | 60 | 30 | green |

These sets of three values are property of the objects and not of the light which crosses them, because they do not change within very wide limits of changes of the intensity of the light emitted from the source or its spectral distribution.

As it has already been pointed out, blue is identified by a set of three values where the reflectance is prevalent in the field of the short wavelengths; yellow by a set of three values which present a minimum in correspondence of the short wavelengths; red by a set of three which presents prevalent values in the field of long wavelengths; green by sets of three which present prevalent values in the field of medium wavelengths.

Following examples are supplied to illustrate but not to limit the invention.

**Example 1**

By using the assembling scheme of Fig.1, two photometric sensors have been assembled respectively in position 2 and in position 4. Three measurements have been carried out by using different lamps in sequence.

There have been used:

1 - discharge lamp OSRAM HQI/N white light 4500 K strong emission in the long wavelengths)
2 - sodium vapour lamp OSRAM Na (strong emission in the medium wavelengths)
3 - discharge lamp OSRAM-HQV black light (strong emission in the long wavelengths)

In three cases a blue bottle, flattened in direction of the length, kept firm against a white background has been submitted to different measurements. In the three cases the reflected light has been measured obtaining a set of three values rectified with the procedure indicated in the description.

In the following table the average values of 5 measurements have been reported.

| wavelengths | long $x_{1corr}$ | medium $x_{2corr}$ | short $x_{3corr}$ |
|---|---|---|---|
| case N° | | | |
| 1 | 27 | --- | --- |
| 2 | --- | 36 | --- |
| 3 | --- | --- | 64 |

The set of three values corresponds to blue within the limits of the accepted tolerances.

**Example 2**

Measurements have been carried out with the procedure followed in example 1 on the same blue bottle dirtied with a thin layer of machine oil so that blue colour had been changed but was still recognizable with the eye. Following results have been obtained.

| wavelengths | long $x_{1corr}$ | medium $x_{2corr}$ | short $x_{3corr}$ |
|---|---|---|---|
| case N° | | | |
| 1 | 16 | --- | --- |
| 2 | --- | 26 | --- |
| 3 | --- | --- | 52 |

The colour corresponding to the set of three measured values is still classifiable as blue, even if with lower saturation or with a greyer tone.

**Example 3**

By using the assembling scheme of fig. 1, three pairs of photometric sensors have been assembled; the first one in position 2 and the second one in position 4.
Measurements have been carried out by using following lamp;

- fluorescent lamp OSRAM Lumilux colour 41 interiors 2700 K, which shows distributed emission in all the wavelengths of the visible spectrum. Particularly it presents strong peaks at 440, 530 and 620 nm.

The sensors have been screened as follows:

- long waves: filter Edmund red 821
- medium waves: Filter Edmund yellow 809
- short waves: filter Edmund blue 856

A light green bottle and a dark green bottle have been submitted to different measurements. The bottles were flattened in conformity with the length and run slowly by hand against a white background.
The reflected lights have been measured with the three pairs of sensors, obtaining a set of three values rectified with the procedure indicated in the description.
The average values of 10 measurements carried out in motion have been reported in the following table.

| wavelengths | long $x_{1corr}$ | medium $x_{2corr}$ | short $x_{3corr}$ |
|---|---|---|---|
| case | | | |
| dark green | 23 | 67 | 29 |
| light green | 45 | 75 | 48 |

In both cases the sets of three values belong to those classifiable as green with the second set with a more pastel shade.

The two measurement results are distinguishable between them and from the ones obtained in example 1 for the blue bottles, with the same facility with which a human observer distinguishes the respective colours.

**Claims**

1. Method for the colour identification of hollow bodies of plastics material comprising the implementation of reflectance measurements of the hollow bodies in the spectrum regions respectively of short, medium and long wavelengths and associating to each colour a set of three reflectance values characteristic of that colour.

2. Method according to claim 1 wherein the identification is carried out on beverage bottles of polyester resin.

3. Method according to claims 1 and 2 wherein blue is identified by sets of three values with the greatest reflectance placed in the region of the short wavelengths.

4. Method according to claims 1 and 2 wherein green is identified by three values with the greatest reflectance placed in the region of the medium wavelengths.

5. Method according to claims 1 and 2 wherein red is identified by three values with the greatest reflectance placed in the region of the long wavelengths.

6. Method according to claims 1 and 2 wherein violet is identified by a set of three values with the minimum of reflectance in the region of the middle wavelengths.

7. Method according to claims 1 and 2 wherein yellow is identified by three values with a minimum in the region of the short wavelengths.

8. Device for the colour identification of hollow bodies of plastics material comprising:

   a) a light source placed in such a way as to light up completely the object and emitting luminous energy in any region of the visible spectrum,
   b) a measurement sensors station of the total quantity of the light emitted from the light source placed in such a way to allow measurements in three different regions of the visible spectrum including respectively the regions of short, medium and long wavelengths,
   c) a measurement position where the object is placed for the colour determination and where it is presented in a parallel position to the support surface and separated from other objects,
   d) a set of three sensors pointed to the object of which it has to be established the colour and positioned in such a way as to avoid or reduce the effects of the specular reflection from the object, and
   e) an elaboration unit of the signals coming from the sensors b) and c), which is able to provide a set of three percentage values pointing out the value of the reflectivity of the object in the three fields of the visible spectrum with long, medium and short wavelengths.

9. Device according to claim 8, in which three light sources are used side by side, everyone emitting in a different field of the visible spectrum.

10. Device according to claim 8, in which it is used only one pair of sensors which carries out in sequence three measurements in three different fields of the visible spectrum modifying each time the characteristics of the light emission.

11. Device according to previous claims from 8 to 10 in which sets of three sensors b) and d) are screened by filters whose passing wave band is placed in the short, medium and long wavelengths.

12. Device according to claims 8 to 11, in which the body for the colour recognition is placed in the measurement position c) in a flattened form, in corformity with the length.